# EUROPÄISCHE PATENTANMELDUNG

(11) **EP 2 876 510 A1**
(43) Veröffentlichungstag der Anmeldung: **27.05.2015**
(21) Anmeldenummer: 14191477.0
(22) Anmeldetag: 03.11.2014
(51) Int. Cl.: G05B 9/03, G05B 19/05, G05B 19/042

(54) **Sicherheitssteuerung zum sicheren Ein- und Ausschalten eines elektrischen Verbrauchetrs**

(30) Priorität: 20.11.2013 DE 102013112816
(71) Anmelder: Wieland Electric GmbH, 96052 Bamberg (DE)
(72) Erfinder: Ziebehl, Detlef, 14612 Falkensee (DE)
(74) Vertreter: Harbach, Ulrich

(57) **Zusammenfassung**

Eine Sicherheitssteuerung (1), ausgelegt zum gemäß einer Sicherheitsvorschrift sicheren Ein- und Ausschalten eines elektrischen Verbrauchers (12), umfassend zumindest einen Ausgang (10), an den der elektrische Verbraucher (12) unter Bildung eines sicher schaltbaren Versorgungsstromkreises für den elektrischen Verbraucher (12) anschließbar ist, weiter umfassend zumindest einen Schalteingang (22) zum Anschluss eines Sicherheitsschaltelements (18) sowie eine Sicherheitssteuereinheit (2), welche den Ausgang (10) in Abhängigkeit von Signalen an dem Schalteingang (22) sicher schaltet, soll. Dazu umfasst die Sicherheitssteuerung (1) eine mit der Sicherheitssteuereinheit (2) datenseitig verbundene Steuereinheit (38), die zur Ausführung nicht sicherheitsrelevanter Funktionen ausgebildet ist.

## Beschreibung

Die Erfindung betrifft eine Sicherheitssteuerung, ausgelegt zum gemäß einer Sicherheitsvorschrift sicheren Ein- und Ausschalten eines elektrischen Verbrauchers, umfassend zumindest einen Ausgang, an den der elektrische Verbraucher unter Bildung eines sicher schaltbaren Versorgungsstromkreises für den elektrischen Verbraucher anschließbar ist, weiter umfassend zumindest einen Schalteingang zum Anschluss eines Sicherheitsschaltelements sowie eine Sicherheitssteuereinheit, welche den Ausgang in Abhängigkeit von Signalen an dem Schalteingang sicher schaltet. Die Erfindung betrifft weiter ein Verfahren zum Betreiben einer derartigen Sicherheitssteuerung.

Sicherheitssteuerungen werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den oder die elektrischen Verbraucher über Ausgänge der Sicherheitssteuerung gesteuert, an die der jeweilige Verbraucher über einen Aktor (z.B. Schütze, Ventile etc.) unter Bildung eines Versorgungsstromkreises angeschlossen wird. Sobald die Sicherheitssteuerung den Versorgungsstromkreis unterbricht, wird der Verbraucher in einen sicheren Zustand überführt, d.h. üblicherweise ausgeschaltet.

Sicherheitssteuerungen weisen weiterhin üblicherweise eine Anzahl von Schalteingängen und -ausgängen zum Anschluss der Arbeitskontakte eines Sicherheitsschaltelements auf. Das Sicherheitsschaltelement kann z.B. ein NotAus-Schalter sein, eine Positions- oder Stellungsüberwachung z.B. einer Schutztür, eine Lichtschranke, eine Schaltmatte etc. Das Sicherheitsschaltelement hat dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll der Versorgungsstromkreis des elektrischen Verbrauchers dann unterbrochen werden, wenn das Sicherheitsschaltelement nicht mehr in der Position "sicher" ist, d.h. die Ausgänge werden in Abhängigkeit von den Eingängen sicher ein- und ausgeschaltet. Diese Aufgabe wird von einer Sicherheitssteuereinheit in der Sicherheitssteuerung übernommen.

Sicheres Ein- und Ausschalten bezüglich des Versorgungsstromkreises bedeutet in diesem Zusammenhang, dass die Sicherheitssteuerung zur Erfüllung der einschlägigen Sicherheitsvorschriften und -zertifizierungen, wie beispielsweise der EN 61508 oder der EN 954-1 ausgelegt ist. Die Erfüllung der jeweiligen Norm bzw. einer in der Norm definierten Sicherheitsstufe wird in den Normen durch Parameter für die Zuverlässigkeit der Sicherheitsfunktion von Geräten definiert. Beispielsweise werden in der EN 61508 die Berechnungsgrundlagen für PFH (probability of dangerous failure per hour - Wahrscheinlichkeit des Versagens pro Stunde) und PFD (probability of dangerous failure on demand - Wahrscheinlichkeit eines Versagens bei Anforderung) geliefert. Aus diesen Parametern lässt sich die Sicherheitsstufe SIL ablesen. Des Weiteren wird in der EN 61508 die SFF (Safe Failure Fraction) eingeführt, ein Maß dafür, welcher Anteil aller denkbaren Fehler in die sichere Richtung geht.

Zur Erreichung der genannten Sicherheitsstufen sind die internen Schaltkreise der Sicherheitssteuerung typischerweise redundant ausgestaltet. Die Schaltelemente zum Ein- und Ausschalten des Versorgungsstromkreises des elektrischen Verbrauchers umfassen beispielsweise dazu zwei in Reihe geschaltete Schalter, die von getrennten Stromkreisen gesteuert werden. Weiterhin umfasst eine Sicherheitssteuerung typischerweise ein Auswertesystem als Teil der Sicherheitssteuereinheit, das eine umfangreiche permanente Selbstkontrolle der Sicherheitssteuerung durchführt.

Neben den eigentlichen Sicherheitsfunktionen, d.h. dem sicheren Schalten der Ausgänge und der Selbstüberwachung, muss die Sicherheitssteuerung auch weitere, nicht sicherheitsrelevante Funktionen ausführen, wie z.B. die Kommunikation zu anderen Sicherheitssteuerungen oder externen Rechnern. Hierbei ergibt sich jedoch das Problem, dass dadurch auch nicht sicherheitsrelevante Funktionen, wie z.B. die genannte Kommunikation oder Diagnosefunktionen, nach den gleichen Richtlinien wie für Sicherheitssoftware nach EN 61508 entwickelt und getestet werden müssen. Damit lassen sich keine sogenannten 3rd-Party-Softwaremodule einsetzen, da der zu führende Korrektheitsbeweis dieser Module in aller Regel mit vertretbarem Aufwand nicht machbar ist.

Bislang wird daher z.B. die Kopplung zwischen Sicherheitssteuerung und externem Rechner über einfache, leicht zu testende, meist proprietäre Protokolle abgewickelt, z.B. über eine RS232-Schnittstelle. RS232 ist aber heute immer weniger verbreitet und wird von vielen aktuellen Rechnersystemen nicht mehr unterstützt.

Es ist daher Aufgabe der Erfindung, eine Sicherheitssteuerung sowie ein Verfahren zum Betreiben einer Sicherheitssteuerung anzugeben, die die Ausführung komplexer, nicht sicherheitsrelevanter Zusatzfunktionen erlaubt, ohne dabei die technische Komplexität bei der Konstruktion und Programmierung wesentlich zu erhöhen.

Diese Aufgabe wird bezüglich der Sicherheitssteuerung erfindungsgemäß gelöst, indem die Sicherheitssteuerung eine mit der Sicherheitssteuereinheit datenseitig verbundene Steuereinheit umfasst, die zur Ausführung nicht sicherheitsrelevanter Funktionen ausgebildet ist.

Bezüglich des Verfahrens wird die Aufgabe gelöst, indem nicht sicherheitsrelevante Funktionen auf einer mit der Sicherheitssteuereinheit datenseitig verbundene Steuereinheit der Sicherheitssteuerung ausgeführt werden.

Die Erfindung geht dabei von der Überlegung aus, dass vergleichsweise komplexe, nicht sicherheitsrelevante Funktionen, d.h. z.B. Kommunikationsfunktionen über moderne Schnittstellen wie USB und Ethernet dann ohne eine unverhältnismäßige Erhöhung des Software-Entwicklungsaufwands für die Sicherheitssteuerung ermöglicht werden könnten, wenn die dafür nötige Software von der sicherheitsrelevanten Software in der Sicherheitssteuerung möglichst rückwirkungsfrei getrennt werden könnte. Rückwirkungsfrei bedeutet in diesem Zusammenhang, dass ein Ausfall oder eine Fehlfunktion der nicht sicherheitsrelevanten Funktionen keinerlei sicherheitskritische Auswirkungen auf die Sicherheitsfunktion der Sicherheitssteuerung hat. Dies ist erreichbar, indem die Sicherheitsfunktionen von den nicht sicherheitsrelevanten Funktionen physikalisch getrennt werden, nämlich durch Bereitstellung einer zweiten, von der Sicherheitssteuereinheit separaten Steuereinheit, auf der die nicht sicherheitsrelevanten Funktionen ausgeführt werden.

In vorteilhafter Ausgestaltung umfasst die Sicherheitssteuereinheit dabei einen ersten Mikroprozessor. Ein derartiger Mikroprozessor oder CPU (Central Processing Unit) ermöglicht eine flexible und anpassbare Programmierung der Sicherheitssteuerung, insbesondere in Fällen, in denen die Sicherheitssteuerung modulartig aufgebaut ist und somit erweitert werden kann. Hier hat ein Mikroprozessor als programmierbare elektronische Lösung auch hinsichtlich der Flexibilität bezüglich anschließbarer Sicherheitsschaltelemente etc. deutliche Vorteile gegenüber einer rein elektrisch realisierten Lösung bzw. macht komplexere Sicherheitssteuerungen überhaupt erst möglich.

Zur Realisierung der geforderten Sicherheitskriterien gemäß den genannten Normen umfasst die Sicherheitssteuereinheit vorteilhafterweise weiterhin einen zweiten, zum ersten Mikroprozessor redundanten Mikroprozessor. Redundanz bedeutet in diesem Zusammenhang, dass der zweite Mikroprozessor ebenso wie der erste vollständig die sicherheitsrelevanten Aufgaben wie die Steuerung der Ausgänge in Abhängigkeit von Signalen an den Eingängen, Selbsttest etc. durchführen kann. Zusätzlich findet eine permanente Querkommunikation zwischen den beiden Mikroprozessoren der Sicherheitssteuereinheit auf Übereinstimmung statt, d.h. eine gegenseitige Kontrolle.

In weiterer vorteilhafter Ausgestaltung umfasst die Steuereinheit, die für die nicht sicherheitsrelevanten Aufgaben zuständig ist, ebenfalls einen Mikroprozessor. Dieser Mikroprozessor kann, da er nicht der strengen Funktionskontrolle im Rahmen der Zertifizierungskontrolle unterworfen ist, beliebig komplex ausgestaltet werden und insbesondere auch 3rd-Party-Softwaremodule enthalten, um praktisch beliebige Funktionen zu realisieren.

Insbesondere kann die Sicherheitssteuerung vorteilhafterweise eine externe Schnittstelle umfassen, die mit der Steuereinheit datenseitig verbunden ist. Die nicht sicherheitsrelevanten Funktionen, die von der Steuereinheit ausgeführt werden, umfassen somit vorteilhafterweise eine Kommunikation über eine externe Schnittstelle. Über die externe Schnittstelle können externe Rechner angebunden werden, so dass für den Anwender eine komfortable Bedienoberfläche für die Sicherheitssteuerung realisiert werden kann.

Die externe Schnittstelle ist dabei vorteilhafterweise eine USB- (Universal Serial Bus-) oder Ethernet-Schnittstelle. Sowohl USB als auch Ethernet sind heute in den meisten Rechnersystemen als Schnittstellen verfügbar und erlauben eine schnelle Datenübertragung. USB-Schnittstellen können zum lokalen Verbinden eines Rechners genutzt werden, während Ethernet sowohl lokal als auch per Datenfernübertragung einen Zugriff auf die Sicherheitssteuerung erlaubt. Auch Wireless-Lösungen wären über beide Schnittstellen denkbar. Allgemein ist die Schnittstelle vorteilhafterweise eine Schnittstelle, die auf dem OSI-( Open Systems Interconnection-)Referenzmodell für Netzwerkprotokolle basiert.

Die von der genannten Steuereinheit durchgeführten nicht sicherheitsrelevanten Funktionen umfassen dabei vorteilhafterweise Diagnosefunktionen. Dies beinhaltet sowohl die Erfassung des momentanen Status sowie Daten und Fehlermeldungen von der Sicherheitssteuereinheit, als auch deren Aufbereitung. Die Steuereinheit könnte beispielsweise einen Webserver umfassen, der sowohl lokal als auch remote die Diagnosedaten aufbereitet und einem Benutzer über eine Webseite zur Verfügung stellt.

In weiterer vorteilhafter Ausgestaltung umfassen die nicht sicherheitsrelevanten Funktionen Programmierungs- und/oder Konfigurationsfunktionen für die Sicherheitssteuereinheit. Die nicht sichere Steuereinheit fungiert somit als komfortable Schnittstelle zur Programmierung und Konfiguration der Sicherheitssteuereinheit. Dies ist insbesondere bei modularen Sicherheitssteuerungen von Vorteil, die erweiterbar eine Vielzahl von Ein- und Ausgängen für verschiedenste Sicherheitsschaltelemente und Ausgangskreise umfassen können. Die nicht sichere Steuereinheit kann somit Softwareupdates der Sicherheitssteuereinheit und von sich selbst über einen Bootloader verwalten, die Speicherkarte für die Konfigurationsdaten verwalten sowie die Konfigurationsdaten an die Sicherheitssteuereinheit übergeben. Die sicherheitsrelevanten Funktionen bezüglich der Konfigurationsdaten, d.h. deren Integritäts- und Plausibilitätsprüfung, sowie die Ausführung des entsprechenden Logikprogramms werden jedoch allein von der zertifizierten Sicherheitssteuereinheit ausgeführt.

Die mit der Erfindung erzielten Vorteile bestehen insbesondere darin, dass durch die Bereitstellung einer zweiten, von der Sicherheitssteuereinheit separaten Steuereinheit, auf der nicht sicherheitsrelevante Funktionen ausgeführt werden, eine Realisierung von hochwertigen Diagnosefunktionen und Kommunikationsaufgaben in einer Sicherheitssteuerung über Standard-Schnittstellen wie USB und Ethernet zum Anschluss eines externen Rechners ermöglicht wird, ohne dass diese Funktionalität den Software-Entwicklungsaufwand für die Sicherheitssteuerung unverhältnismäßig erhöhen würde. Da diese zweite, separate Steuereinheit nicht sicherheitsrelevant ist, kann die Software für diese Steuereinheit nach herkömmlichen Qualitätsanforderungen für nicht-sichere Software entwickelt werden und insbesondere auch ohne eine Neuzertifizierung der Sicherheitsfunktionen zukünftigen Ansprüchen entsprechend weiterentwickelt werden. Die Beschränkungen der Funktionalität hinsichtlich des durch die Sicherheitsüberprüfung bedingten, vertretbaren Aufwandes bei der Entwicklung sind dadurch aufgehoben und es können hochwertige Diagnosefunktionen wie z.B. über einen integrierten Web-Server angeboten werden. Die Flexibilität und Leistungsfähigkeit der Sicherheitssteuerung wird dadurch erheblich erhöht. Auch automatisch von der Sicherheitssteuerung per E-Mail versandte Alarmmeldungen oder eine Fernwartung des Systems wird ebenfalls realisierbar.

Ein Ausführungsbeispiel der Erfindung wird anhand einer Zeichnung näher erläutert. Darin zeigt die einzige

FIG eine schematische Darstellung einer Sicherheitssteuerung.

Die FIG zeigt eine modulare Sicherheitssteuerung 1 mit einer zentralen Sicherheitssteuereinheit 2 im Hauptmodul 4. Die Sicherheitssteuereinheit 2 weist im Ausführungsbeispiel zwei Mikrocontroller 6, 8 auf, die redundant zueinander ausgestaltet sind. Das Hauptmodul 4 der Sicherheitssteuerung 1 weist zwei Ausgänge 10 auf, an die ein elektrischen Verbraucher angeschlossen ist, der Gefahrenpotential aufweist und daher sicher ausgeschaltet werden soll. Hierzu sind die Ausgänge 10 über zwei seriell angeordnete Schaltelemente 14 verbunden, die jeweils von einem der Mikrocontroller 6, 8 angesteuert werden. Nur wenn beide Mikrocontroller 6, 8 ihr jeweils zugeordnetes Schaltelement schließen, wird die Verbindung zwischen beiden Ausgängen 10 niederohmig und der Verbraucher 12 wird eingeschaltet.

Die Stromversorgung der Sicherheitssteuerung 1 mit der Sicherheitssteuereinheit 2 und den übrigen noch im Folgenden erläuterten Bauteilen erfolgt über Versorgungsanschlüsse 16 für +24 V Spannung und Erdung.

Um die Funktion des elektrischen Verbrauchers 12 im Gefahrenfall zu unterbrechen oder zumindest zu beeinflussen, sind verschiedene Sicherheitsschaltelemente 18 an die Sicherheitssteuerung 1 anschließbar. Diese können z.B. Not-Aus-Schalter, Lichtschranken, Türpositionsschalter etc. sein. Im Ausführungsbeispiel der FIG ist ein Not-Aus-Schalter als Sicherheitsschaltelement 18 vorgesehen. Dessen Not-Aus-Taster schließt gleichzeitig zwei Schalter 20. Zum Anschluss dieser Sicherheitsschaltelemente 18 weist die Sicherheitssteuerung 1 am Hauptmodul 4 zwei Schaltausgänge 22 und zwei Schalteingänge 24 auf. Jedem Mikroprozessor 6, 8 ist dabei jeweils ein Schaltausgang 22 und ein Schalteingang 24 zugeordnet. Der Not-Aus-Schalter ist derart angeschlossen, dass ein Strompfad von einem Schaltausgang 22 eines Mikroprozessors 6, 8 über einen der Schalter 20 zum Schalteingang 24 desselben Mikroprozessors 6, 8 gebildet wird. Dies gilt für beide Mikroprozessoren 6, 8, so dass eine redundante Schaltung für beide Mikroprozessoren 6, 8 gebildet wird.

An den Schaltausgängen 22 kann entweder eine positive Gleichspannung oder Prüfsignale mit zyklischen, pulsartigen Prüfpulsen zur Leitungs- und Kurzschlussprüfung anliegen, die jeweils für eine kurze Dauer 0 Volt über der sonst erhaltenen Grundspannung einstellen. Die Prüfpulse können alternativ auch auf einen Trigger wie z.B. eine manuelle oder automatische veranlasste Prüfanfrage hin abgegeben werden. Das Signal der Schaltausgänge 22 durchläuft das Sicherheitsschaltelement 18 und wird an den Schalteingängen 24 wieder aufgenommen und ausgewertet.

Die Sicherheitssteuerung 1 umfasst neben dem Hauptmodul 4 ein erstes Zusatzmodul 26 mit je zwei Schalteingängen 22 und Schaltausgängen 24 sowie ein zweites Zusatzmodul 28 mit zwei Ausgängen 10. Diese sind im Ausführungsbeispiel nicht an Verbraucher 12 oder Sicherheitsschaltelemente 18 angeschlossen, ermöglichen aber grundsätzlich den Anschluss weiterer zusätzlicher Verbraucher 12 und Sicherheitsschaltelemente 18. Durch die Erweiterung der Sicherheitssteuerung 1 mit weiteren Zusatzmodulen 26, 28 lässt sich so eine beliebige Komplexität mit einer Vielzahl von unterschiedlichen Sicherheitsschaltelementen 18 und separaten Schaltkreisen erreichen. Die Zusatzmodule 26, 28 sind über zwei jeweils einem der Mikroprozessoren 6, 8 zugeordnete Sicherheitsbusse 30 mit dem Hauptmodul 4 verbunden.

Die sowohl eingangs- als auch ausgangsseitige beschriebene Redundanz der Mikroprozessoren 6, 8, Schalter 20 im Sicherheitsschaltelement 18 und Schaltelemente 14 im Ausgangskreis garantiert die Sicherheit gemäß der einschlägigen Sicherheitsnormen. Zusätzlich findet eine permanente gegenseitige Kontrolle sowie Selbstkontrolle der Mikroprozessoren 6, 8 statt.

Die Logikregeln zur Auswertung der Schalteingänge/-ausgänge 22, 24 und die entsprechende Ansteuerung der Ausgänge 10 hängen von der Art und Anzahl der angeschlossenen Sicherheitsschaltelemente 18 und Verbraucher 12 ab sowie weiteren Anforderungen in der jeweiligen Anwendung. Sie sind daher flexibel programmierbar. Die Programmierung erfolgt über einen üblichen als Personal Computer ausgestalteten Rechner 32. Der Anschluss des Rechners 32 soll über übliche Schnittstellen erfolgen, im Ausführungsbeispiel eine USB-Schnittstelle 34 der Sicherheitssteuerung 1. Die Sicherheitssteuerung 1 weist zusätzlich eine Ethernet-Schnittstelle 36 auf.

Um die Nutzung dieser gegenüber einer RS232-Schnittstelle komplexeren Schnittstellen 34, 36 zu ermöglichen und dem Benutzer komfortable Diagnosemöglichkeiten zu bieten, ist die für die Gesamtfunktionalität der Sicherheitssteuerung 1 notwendige Software in sicherheitsrelevante und nicht sicherheitsrelevante Softwaremodule aufgeteilt. Die sicherheitsrelevanten Softwaremodule wie z.B. die Ausführung und Plausibilitäts- und Integritätsprüfung der Logikregeln, die Ansteuerung der Schalteingänge 22, Schaltausgänge 24 und Ausgänge 10, die Querkommunikation zwischen den Mikroprozessoren 6, 8, die Steuerung der Sicherheitsbusse 30 zu den Zusatzmodulen 26, 28 sowie Selbsttestfunktionen werden ausschließlich auf den Mikroprozessoren 6, 8 in der beschriebenen redundanten Weise ausgeführt. Alle anderen, nicht sicherheitsrelevanten Funktionen werden in einer separaten Steuereinheit 38 der Sicherheitssteuerung 1 mit eigenem Mikroprozessor 40 ausgeführt.

Der Mikroprozessor 40 steht lediglich in Kommunikationsverbindung mit den sicheren Mikroprozessoren 6, 8 und übernimmt auch die externe Verbindung über die Schnittstellen 34, 36. Die externen Schnittstellen 34, 36 haben also keine direkte Verbindung zur Sicherheitssteuereinheit 2 mit den Mikroprozessoren 6, 8. Die dadurch erreichte physikalische Trennung der sicherheitsrelevanten und nicht sicherheitsrelevanten Aufgaben ermöglicht einen relativ einfach zu führenden Nachweis der Rückwirkungsfreiheit der nicht sicherheitsrelevanten Software auf die Sicherheitssoftware. Dadurch kann die nicht sicherheitsrelevante Software beliebig ausgebildet werden.

Die Steuereinheit 38 für nicht sicherheitsrelevante Funktionen mit dem Mikroprozessor 40 verwaltet z.B. die vollständige Kommunikation zum Programmiersystem auf dem Rechner 32. Weiterhin ist eine Diagnoseaufbereitung vorgesehen, die auf einem Webserver über die Ethernet-Schnittstelle 36 zur Verfügung gestellt wird. Die Steuereinheit 38 verwaltet auch den nicht näher gezeigten Speicher für die Konfigurationsdaten mit den Logikregeln und verteilt die Konfigurationsdaten an die Mikroprozessoren 6, 8 der Sicherheitssteuereinheit 2.

Weiterhin steuert die Steuereinheit 38 die Sicherheitssteuereinheit 2 mit grundlegenden Betriebsmodi an, schaltet also die Sicherheitssteuereinheit 2 in den Betriebsmodus, in den Konfigurationsmodus oder aus. Auch wird eine Zugangskontrolle zur Software der Sicherheitssteuerung 1 hier verwaltet, z.B. über Passwörter. Es ist weiterhin ein Bootloader vorgesehen, mittels dessen ein Software-Update aller Mikroprozessoren 6, 8, 40 in der Sicherheitssteuerung 1 durchgeführt werden kann.

Im Ausführungsbeispiel wurde die Erfindung anhand einer modularen Sicherheitssteuerung 1 dargestellt, bei der das Hauptmodul 4 für sich genommen bereits betriebsfähig ist und die Zusatzmodule 26, 28 nur optional sind. Sie lässt sich jedoch ebenso bei einer nicht-modularen Sicherheitssteuerung 1 realisieren oder bei einer modularen Sicherheitssteuerung 1 mit andersartiger Aufteilung der verschiedenen Bauteile auf die jeweiligen Module 4, 26, 28: Beispielsweise können in einer Ausführungsform auch überhaupt keine Ausgänge 10 und Schalteinein- und -ausgänge 22, 24 auf dem Hauptmodul 4 vorgesehen sein. Es können z.B. die Ausgänge 10 sowie Schaltein- und ausgänge 22, 24 jeweils auf separaten Zusatzmodulen 26, 28 angeordnet sein. Beliebige Kombinationen hinsichtlich der Verteilung der einzelnen Bauteile auf die Module 4, 26, 28 sind sind dabei denkbar.

### Bezugszeichenliste

- 1: Sicherheitssteuerung
- 2: Sicherheitssteuereinheit
- 4: Hauptmodul
- 6, 8: Mikrocontroller
- 10: Ausgang
- 12: Verbraucher
- 14: Schaltelement
- 16: Versorgungsanschluss
- 18: Sicherheitsschaltelement
- 20: Schalter
- 22: Schalteingänge
- 24: Schaltausgänge
- 26, 28: Zusatzmodul
- 30: Sicherheitsbus
- 32: Rechner
- 34: USB-Schnittstelle
- 36: Ethernet-Schnittstelle
- 38: Steuereinheit
- 40: Mikroprozessor

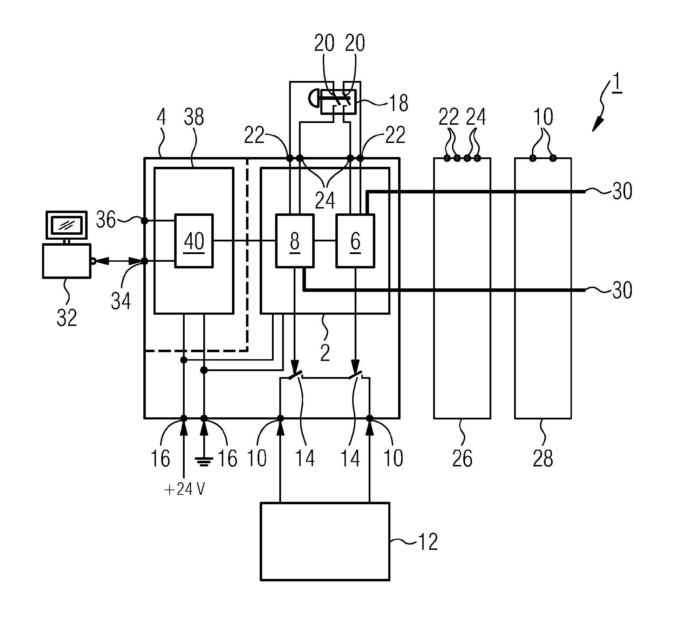

## Patentansprüche

1. Sicherheitssteuerung (1), ausgelegt zum gemäß einer Sicherheitsvorschrift sicheren Ein- und Ausschalten eines elektrischen Verbrauchers (12), umfassend zumindest einen Ausgang (10), an den der elektrische Verbraucher (12) unter Bildung eines sicher schaltbaren Versorgungsstromkreises für den elektrischen Verbraucher (12) anschließbar ist, weiter umfassend zumindest einen Schalteingang (22) zum Anschluss eines Sicherheitsschaltelements (18) sowie eine Sicherheitssteuereinheit (2), welche den Ausgang (10) in Abhängigkeit von Signalen an dem Schalteingang (22) sicher schaltet, wobei die Sicherheitssteuerung (1) eine mit der Sicherheitssteuereinheit (2) datenseitig verbundene Steuereinheit (38) umfasst, die zur Ausführung nicht sicherheitsrelevanter Funktionen ausgebildet ist.

2. Sicherheitssteuerung (1) nach Anspruch 1, bei der die Sicherheitssteuereinheit (2) einen ersten Mikroprozessor (6) umfasst.

3. Sicherheitssteuerung (1) nach Anspruch 2, bei der die Sicherheitssteuereinheit (2) einen zweiten, zum ersten Mikroprozessor (6) redundanten Mikroprozessor (8) umfasst.

4. Sicherheitssteuerung (1) nach einem der vorhergehenden Ansprüche, bei der die Steuereinheit (38) einen dritten Mikroprozessor (40) umfasst.

5. Sicherheitssteuerung (1) nach einem der vorhergehenden Ansprüche, weiter umfassend eine externe Schnittstelle (34, 36), die mit der Steuereinheit (38) datenseitig verbunden ist.

6. Sicherheitssteuerung (1) nach Anspruch 5, bei der die externe Schnittstelle (34, 36) eine USB- oder Ethernet-Schnittstelle oder eine andere Schnittstelle, die auf dem OSI-Referenzmodell für Netzwerkprotokolle basiert, ist.

7. Verfahren zum Betreiben einer Sicherheitssteuerung (1), ausgelegt zum gemäß einer Sicherheitsvorschrift sicheren Ein- und Ausschalten eines elektrischen Verbrauchers (12), umfassend zumindest einen Ausgang (10), an den der elektrische Verbraucher (12) unter Bildung eines sicher schaltbaren Versorgungsstromkreises für den elektrischen Verbraucher (12) anschließbar ist, weiter umfassend zumindest einen Schalteingang (22) zum Anschluss eines Sicherheitsschaltelements (18) sowie eine Sicherheitssteuereinheit (2), welche den Ausgang (10) in Abhängigkeit von Signalen an dem Schalteingang (22) sicher schaltet, wobei nicht sicherheitsrelevante Funktionen auf einer mit der Sicherheitssteuereinheit (2) datenseitig verbundene Steuereinheit (38) der Sicherheitssteuerung (1) ausgeführt werden.

8. Verfahren nach Anspruch 7, bei dem die nicht sicherheitsrelevanten Funktionen eine Kommunikation über eine externe Schnittstelle (34, 36) umfassen.

9. Verfahren nach Anspruch 7 oder 8, bei dem die nicht sicherheitsrelevanten Funktionen Diagnosefunktionen umfassen.

10. Verfahren nach einem der Ansprüche 7 bis 9, bei dem die nicht sicherheitsrelevanten Funktionen Programmierungs- und/oder Konfigurationsfunktionen für die Sicherheitssteuereinheit (2) umfassen.
